# EUROPEAN PATENT APPLICATION

(11) **EP 4 190 165 A1**
(43) Date of publication of application: **07.06.2023**
(21) Application number: 22196405.9
(22) Date of filing: 19.09.2022
(51) Int. Cl.: A23J 1/00, A23J 1/12, A23J 3/14, A23J 3/22, A23J 3/26, A23K 10/30, A23K 10/38, A23K 40/25, A23L 7/20, A23L 13/40, A23L 33/185, A23L 33/22, A23P 30/25, C12F 3/06, A23K 20/147, A23K 50/42

(54) **LOW MOISTURE TEXTURISED PLANT PROTEIN FROM BREWER S SPENT GRAIN**

(30) Priority: 03.12.2021 EP 21212260
(71) Applicant: Circular Food Solutions AG, 9240 Uzwil (CH)
(72) Inventor: Witschi, Friedrich, 8260 Stein am Rhein (CH); Petry, Carsten, 8400 Winterthur (CH)
(74) Representative: Hepp Wenger Ryffel AG

(57) **Abstract**

The present disclosure relates to a method for producing a low moisture texturised plant protein. The method comprises the steps of
a) grinding of brewer's spent grain, BSG,
b) providing ingredients for obtaining a mixture, the ingredients comprising 25% to 60% by weight of the ground BSG and at least a plant protein,
c) processing the mixture in an extruder, wherein a homogenous fibrous structure is generated in the extruder to obtain a texturised plant protein,
d) cutting the texturized plant protein, and
e) drying the texturized vegetable protein after cutting.

## Description

The present disclosure relates to a method for producing a low moisture texturised plant protein and a corresponding system. The disclosure also encompasses a vegetarian food product produced with said method or said system. More particularly, the present invention relates to a multipurpose ready-to-use high protein texturate obtained from brewer's spent grain and other vegetable protein powders and a process for preparing the same.

The demand for high protein foods in which several protein sources are used of which major contribution arises from plant sources has risen in recent years. The technological advances concerning the creation of a new texture particularly using vegetable protein have led to the development of texturised vegetable protein (TVP) or texturised plant protein (TPP) or meat analogue.

The use of an extruder under appropriate pressure-shear-temperatures combination yields a product that is fibrous in nature, filamentary in structure, with toughness and chewy texture of meat. This whole process is called thermoplastic extrusion. The advantages of this technology lie in low product cost e.g. because the raw material to be processed is low in cost.

The thermoplastic extrusion process involves the preparation of brewer's spent grain mixture along with other ingredients followed by feeding the mixture into a cooking extruder wherein it is subjected to heat, shear and pressure. When this cooked viscoelastic mass comes out of a restriction, conventionally known as die, the fibrous expanded structure is formed which solidifies to hard texture on cooling or drying. On rehydration and cooking, the fibrous TVP can provide a texture/bite and a mouthfeel comparable to cooked meat.

EP 3 512 352 A1 discloses food compositions, particularly pet food compositions, having a high content of plant protein. The plant protein is prepared by processing Brewer's Spent Grain (BSG), having a moisture content of about 15 % to about 35% by weight, so as to reduce the particle size of the BSG and separating the processed BSG so as to provide a low particle size, high protein fraction.

However, BSG is widely viewed as food waste or side stream of the brewing, malt and spirits beverage industry and not commonly used in human food products. This is due to the fact that the processing of high amounts of BSG is technically challenging.

The present invention has been made in view of the above problems. An object of the present invention is to develop a brewer's spent grain multipurpose food ingredient having high protein content. Another object of the present invention is to provide a brewer's spent grain multipurpose food ingredient in ready-to-use form for convenience to consumers. Still another object of the present invention is to develop a brewer's spent grain multipurpose food ingredient having high protein content in ready-to-use form using texturised vegetable protein (TVP) as the starting material. A further object of the present invention is to provide a process for preparing a brewer's spent grain multipurpose food ingredient having high protein content in ready-to-use form texturised vegetable protein (TVP).

The invention is defined in the independent claims. Dependent claims described preferred embodiments.

The present disclosure relates to a method for producing a low moisture texturised plant protein having a water content of 5% to 12% by weight. The method comprises the steps of
a) grinding of brewer's spent grain, BSG,
b) providing ingredients for obtaining a mixture, the ingredients comprising 25% to 60% by weight of the ground BSG and at least a plant protein,
c) processing the mixture in an extruder, wherein a homogenous fibrous structure is generated in the extruder to obtain a texturised plant protein,
d) cutting the texturized plant protein, and
e) drying the texturized vegetable protein after cutting.

The present invention is related to the use of brewer's spent grain (BSG) for the manufacture of a texturized vegetable protein (product), and vegetarian food products made therefrom. BSG is a waste product of the brewing industry, and its use according to the present invention is highly advantageous from the viewpoint of circular economy. BSG is mostly composed of barley, whereas distiller grain is a mixture of corn rice and other grains (see e.g. Wikipedia excerpt "distillers grains"). Distillers Spent Grain or draff are the organic solids leftovers after fermentation and extraction of ethanol from a fermented sugar solution. The starting material for distillation can be fruits, cereals, potato, and other starch rich plants. The starch or sugar rich plants are macerated and fermented with yeast or bacteria often in combination with enzymes. As a difference to beer production, for the ethanol production the fermentation and ethanol extraction is commonly done here as a mash before separating the spent material In the beer production, the malt extract is fermented to the strength of the final product, typically between 2.5 to 5% ethanol, whereas in the whisky distilleries the ethanol is extracted to strengths above 60% and the remaining liquid is discarded.

Brewer's Spent Grain are the organic solids leftovers mostly husks after separation of the malt extract or wort from a blend mostly composed of barley. Barley husks are acting as filter material for the separation of the extract or wort from the non-soluble parts of the grains. The separation process is done in the lauter ton or in a mash filter depending on the brewery. The spent grain is then collected and typically used as animal feed or discarded. The malt extract obtained after the separation from the husks is the boiled, cooled and then fermented with yeast to beer.

In summary brewer's spent grain are the side stream of the brewers when producing conventional beers. The malt extract is separated from the spent grain before fermentation. The fermented product is beer.

Distiller spent grain or draff are the side streams from distilleries when producing ethanol or ethanol rich products and are using all sorts of sugar and starch rich plants like fruits, cereals, potato. Most often the fermentation and ethanol extraction is done before the separation of the non-soluble parts of the plants. After the extraction, the remaining liquid and the spent grains are separated in filters and discarded or sold as animal feed.

The present invention is limited to BSG.

The term "texturized" has a well-defined meaning in the field of foodstuff and refers to the rheological and structure (geometrical and surface) attributes of a food product perceptible by means of mechanical, tactile, and where appropriate, visual and auditory receptors (e.g. ISO 11036:2020). A texturized protein in accordance with the present invention is a product that exhibits such attributes, most preferably the fibrous and elastic texture of a comparable meat product. The texturisation is generated during the extrusion step.

According to the present invention, it is understood that weight percentages refer to the entire weight of a respective composition or mixture. For example, the water content of the texturized plant protein refers to the entire weight of said texturized plant protein, and the amount of BSG in the ingredients is based on the entire amount of the ingredients used in the method of the present invention.

Various embodiments may preferably implement the following features:
Preferably, the ingredients comprise 30% to 55% by weight of BSG, more preferably 45% to 50% by weight of BSG.

Preferably, the dried texturized plant protein is sieved.

Preferably, the ingredients are mixed to a pre-mixture in step b) and the pre-mixture is provided to the extruder.

Preferably, the method further comprises dehydrating the BSG before step a). Dehydrating is a conventional process and refers here to a process of removing water from the BSG, for example by any conventional drying step such as heating, or by any mechanical removal of water such as by pressing. Wet BSG has a dry weight of typically 9 bis 20 wt.-%, preferably 9-12 wt.-%, based on the entire weight.

According to this preferred embodiment of the present invention, the above amount of 25 to 60 wt.-% BSG, preferably 30% to 55% by weight of BSG, more preferably 45% to 50% by weight of BSG, refer to dehydrated BSG, i.e. dry BSG in the form of a powder.

Preferably, the method further comprises adding water to the mixture in the extruder during step c), and further preferably comprises pre-hydration of the BSG in another part in the extruder during step c).

Preferably, the method further comprises rehydrating the dehydrated BSG prior to or after step a), preferably in a preconditioner.

According to a preferred embodiment of the present invention, the ingredients in step a) of the method of the present invention comprise a plant protein in an amount in the range from 1-75 wt.-%, preferably 5-40 wt.-%, based on the entire weight of the ingredients to be added in said step a).

Preferably, the ingredients comprise one or more of pulses protein, preferably pea protein, soy protein, wheat gluten, gluten protein, oilseeds, protein isolates, protein concentrates such as soy protein concentrate, protein isolates such as pea protein isolates, and additionally other additives such as microalgae or water, malt extract, vinegar, yeast extract or yeast protein, vegetable oil, or salt such as NaCl. If present, those additional additives replace a portion of the plant protein content in the ingredients.

Protein isolates are protein enriched fractions in which the protein content is as high as 80 or more wt.-%, based on the entire amount of the isolate. Protein isolates may be obtained from the material processed as described above by a protein extraction step such as acid or alkali precipitation, membrane filtration, centrifugation, and concentration such as decantation.

Protein concentrates are protein enriched fractions, wherein the content of protein is not as high as in isolates. In a plant protein concentrate, the protein content is typically in the range of 45-70 wt.-%, based on the entire amount of the concentrate.

"Rehydrating" refers to a step of adding water to the BSG and/or the mixture of ingredients obtained in step b). The amount of water to be added in such a step depends inter alia on the water content of the BSG from the brewing process or from a previous dehydration step. The water is preferably to be added to a dry mixture of ingredients obtained from step b) in such an amount that a dough-like composition suitable for extrusion is obtained. Preferably, 100 wt.-% of a dry mixture of ingredients obtained from step b) are blended with 30 to 50 wt.-%, more preferably 40 to 50 wt.-% of water, based on the entire amount of ingredients in the dry mixture obtained from step b).

This means for example, if 100 wt.-% of a dry mixture consisting of 30 wt.-% dry BSG, and 70 wt.-% of a plant proteins blend comprising concentrates of for example soy protein or pea protein and - gluten, are blended with 44 wt.-% of water, the resulting wet mixture comprises 44 wt.-% of water, 39,2 wt.-% of said plant protein blend comprising soy protein of pea protein and gluten, and 16.8 wt.-% of BSG .

A preconditioner and a preconditioning step are well-known in the relevant technical field. During preconditioning, the material to be extruded may be pre-processed for the subsequent extrusion step, for example by adjusting the temperature and/or the moisture content thereof.

Preferably, the BSG comprises barley, and optionally wheat, oat, millet, sorghum, cassava root, rye, rice, maize or spent grain protein concentrate.

Preferably, the extruder is at least partially cooled to 130 °C to 170 °C, preferably to 150 °C.

Preferably, the downstream side of the extruder is hotter than the upstream side, and/or Preferably, a gas is added, preferably CO₂, during step c).

In a first step, BSG is ground to a desired particle size. This can be achieved by conventional grinding techniques, such as using a colloid mill, a ball mill or a hammer mill. According to one embodiment of the present invention, grinding may be performed in a multi-stage process, involving one or more of the above grinding techniques.

Preferably, the BSG is ground in said step to a particle size of 1 to 20 mm, with an average particle size (D₅₀) below 100 µm and (D₉₀) below 400 µm. Average particle sizes can be determined by methods known in the art, preferably laser diffraction or transmission/ scanning electron microscopy.

The method of the present invention can be carried out with a system for producing a texturised plant protein, the system comprising:
a grinder configured to grind brewer spent grain, BSG,
an extruder configured to process ingredients comprising BSG and at least one plant protein to obtain a dry texturised plant protein having a homogenous fibrous structure,
a cutting device, and
a drying device.

Preferably, the system further comprises a sieving device, preferably arranged after the drying device and/orwherein the system further comprises a preconditioner for hydration of the BSG.

The disclosure also encompasses a vegetarian food product, preferably a burger patty, comprising a texturised plant protein produced according to the method as described above.

Preferably, the vegetarian food product comprises 30 % to 55 % by weight of texturised plant protein, TPP, preferably 45 to 50 % by weight of TTP produced according to the method as described above.

Preferably, the vegetarian food product comprises micronutrients, preferably minerals, more preferably at least one of iron, zinc or magnesium and/or vitamins, preferably at least one of B-Group, C or D group.

Preferably, the vegetarian food product comprises a fermented plant protein obtained by fermentation of the texturised plant protein with starter cultures, preferably food grade bacteria and fungi.

The invention will further be described with reference to the figures. Therein,
Fig. 1 shows a flow chart of a basic configuration according to the present disclosure,
Fig. 2 shows a flow chart of an exemplary embodiment of the present disclosure, and
Fig. 3 shows a flow chart of a further exemplary embodiment of the present disclosure.

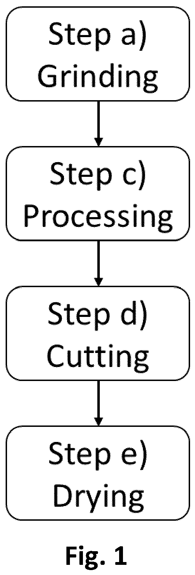

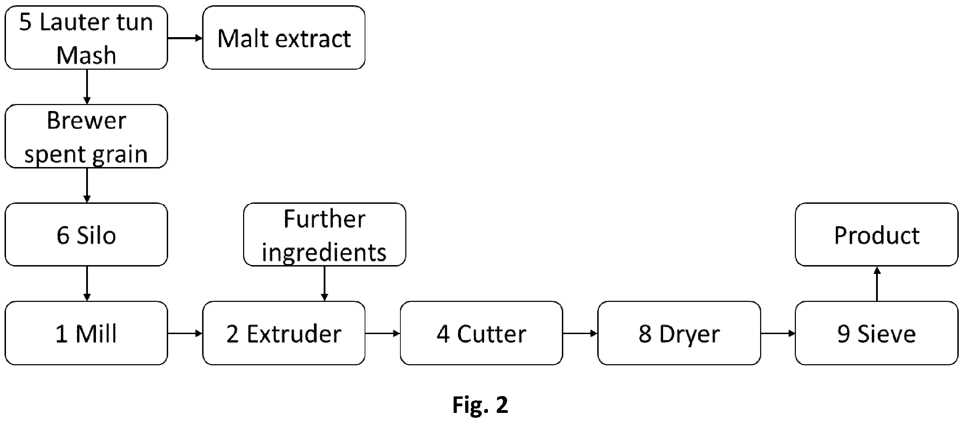

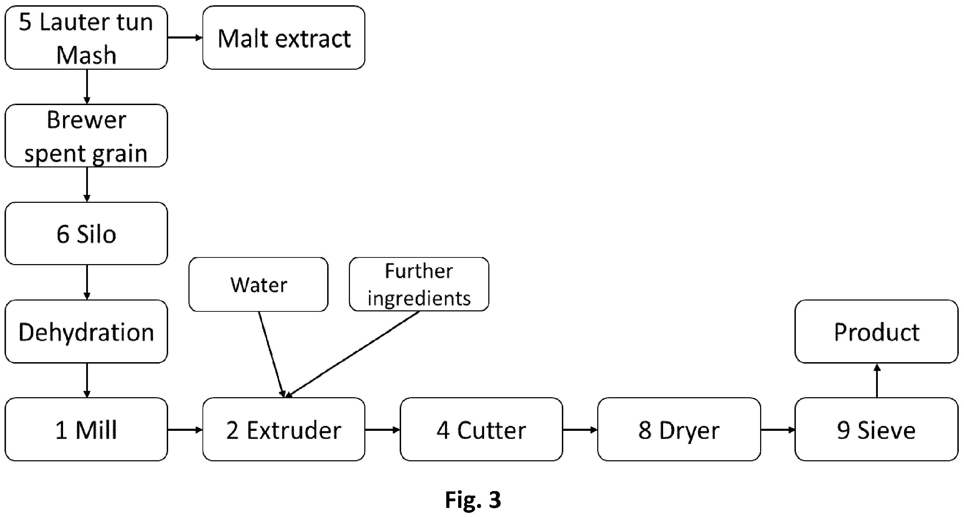

Fig. 1 depicts a basic configuration of a method according to the present disclosure, a corresponding system is shown in Figs. 2 and 3. In order to perform the method according to the disclosure or use the system according to the disclosure, brewer's spent grain (BSG) may be provided. BSG may also be referred to as brewer grains or spent grains from brewing.

The method comprises the steps of a) grinding brewer's spent grain (BSG). The grinding is performed in a grinder 1. The grinder 1 may be a mill, e.g. a turbo mill or a colloid mill.

The ground BSG is mixed with further ingredients in a step b), wherein the BSG amounts to 25% to 60% by weight of the overall mixture, i.e. all ingredients. According to a preferred embodiment, 40-75 % by weight of one or more plant proteins such as soy protein, pea protein and gluten, are added. According to a preferred embodiment, the above amounts are dry weights, and the above ingredients are added in solid form together. In said case, water is added into the extruder, or alternatively into a preconditioner, in order to enable smooth processing of the composition in the extruder.

The obtained mixture is processed in an extruder 2 in step c). The mixing in step b) may be performed directly in the extruder 2 or before adding the mixture to the extruder 2 by conventional mixing means, such as a stirrer. Alternatively, the ingredients may be mixed to a pre-mixture in step b) and said pre-mixture may be provided to the extruder 2. In this case, mixing is performed prior to the processing step. Mixing of the ingredients may be performed in a silo, a buffer tank, or any tub suitable for the purpose.

Extruders are generally known in the art. Reference is made, for example, to WO 2012/158023 A1 or to the extruders, in particular twin-screw extruders, from Bühler. Such extruders preferably have an L/D ratio (total length to screw diameter) in the range from 20 to 60, preferably 25 to 50, and particularly preferably 25 to 40. According to the invention, the extruders are preferably operated at 100 to 1000 rpm, more preferably at 300 to 500 rpm, and particularly preferably 350 to 400 rpm.

A suitable extruder comprises at least one unit for inserting material in a first section of the extruder. The extruder can also have a water feed line and optionally a steam feed line.

The extruder comprises several sections, so-called barrel housings, in which material is processed and conveyed with the aid of at least one rotating screw. The screw elements used in the different barrel housings may be the same, but preferably are different in order to establish different processing conditions in the barrel housings.

The housing of the extruder is preferably temperature controlled. The mixture is kneaded under pressure (usually 1 to 60 bars, preferably 8 to 40 bars, and particularly preferably 10 to 20 bars) to form a homogeneous mixture. This usually involves an energy input of 10 to 120 Wh/kg, preferably 15 to 30 Wh/kg.

Preferably, in the extruder the mixture is heated above the denaturation temperature of the protein, preferably to a temperature in the range from 80 to 180 °C, more preferably 120 to 160 °C, particularly preferably 130 to 150 °C, depending on the protein used.

According to a further preferred embodiment of the present invention, the extruder may be provided with a feed opening for inserting gas into the extruder. Such an extruder is described in WO 2021/032866 A1. Preferably, said feed opening is connected to a gas container (such as a pressure bottle) and allows a controlled introduction of gas into the extruder (for example, via a regulation valve). With this gas, controlled pore formation and an associated adaptation of the product properties to the properties of real meat can be achieved.

According to the present invention, a gas is understood to mean a substance which is gaseous under normal conditions (1 bar, 20 °C). Examples of gases which can be used according to the present invention are CO₂, N₂, N₂O, NH₃ or SO₂, preferably CO₂ or N₂. The gas can be introduced in the gaseous state or alternatively as a liquefied gas.

The introduction of a gas also ensures controlled pore formation. If SO₂ is used, there is a possible formation of disulfide bridges with the proteins contained in the raw material, which results in an additional influence on the texture of the product. The gas can, for example, be introduced into the extruder in an amount of 0.01 to 5 % by weight, preferably 0.05 to 2.5 % by weight, based on the total weight of the above mixture metered into the extruder. For example, the gas may also be introduced in a quantity of 0,5 to 3,0 g (grams), preferably 1,0 to 1,5 g, of gas per kg (kilogram) of above mixture extruded in the extruder, after they have left the extruder.

According to the present invention, the gas is preferably introduced into the extruder at a pressure in the range from 10 to 50 bar, preferably 15 to 30 bar. According to the present invention, the extrudate, at the position of the feed opening for the gas in the extruder, has a temperature in the range from 80 to 180 °C, preferably 120-170 °C, particularly preferably 130 to 160 °C.

According to the invention, the feed opening for the gas is preferably located in a section of the extruder which is located in the vicinity of a cooling die which may be provided at the extruder outlet, preferably in the last third of the extruder length in front of the cooling die, particularly preferably in the last quarter of the extruder length in front of the cooling die. It is particularly preferred that said feed opening is located upstream (in front of) the inlet port, so that first gas and then cellular material may be inserted into the extruder.

The process according to the present invention can, in principle, be operated with a throughput in the range from 10 to 2000 kg/h. The throughput will depend on the size of the extruder.

During the processing step c) in the extruder 2, a homogenous fibrous structure is generated to obtain a texturised plant protein (TPP) or texturised vegetable protein (TVP). A homogenous fibrous structure may particularly refer to an alignment of the fibres present in BSG and the other ingredients .

The method further comprises cutting the texturised plant protein in step d). Said step is performed in a cutting device 4 such as a cutter. After step d), the cut texturised plant protein is dried (step e)) in a drying device 8. The drying device 8, i.e. the dryer, may be a fluid bed dryer or any other suitable form of dryer.

BSG may be obtained from a brewing process, e.g. during beer production, The BSG may be directly used in its hot state having a temperature of 60 °C to 70 °C after it is extracted from a lauter tun 5 or the mash. Preferably, however, it is dehydrated before step b) of the method of the present invention. The grinding step a) may thus be performed with hot BSG which is subsequently provided to the extruder 2. Thereby, energy consumption may be reduced since less additional energy or heat has to be provided during extrusion.

Preferably, the ingredients comprise 30% to 55% by weight of BSG, more preferably 45% to 50% by weight. The ingredients may comprise one or more of pulses protein, preferably pea protein, soy protein, wheat gluten, gluten protein, oilseeds, protein isolates, protein concentrates, microalgae or water. The BSG may comprise barley, and optionally wheat, oat, millet, sorghum, cassava root, rye, rice, maize, spent grain protein concentrate or any mixture of the above depending on the preceding brewing process.

The dried texturised plant protein may be sieved in a sieve 9 after step e).

The ingredients may be mixed to a pre-mixture in step b) and said pre-mixture may be provided to the extruder 2.

Before the grinding step a), the BSG may be dehydrated. The dehydration may be performed by drying and/or pressing. Also, during processing (step c)) in the extruder 2, water may be added to the mixture. Moreover, further water may be added in another part of the extruder during step c) for further pre-hydration.

In order to adjust the water content of the BSG, it may be rehydrated prior to after step a), i.e. grinding of the BSG in the mill 1. Said rehydration may be performed by adding water to the BSG or the mixture of BSG and further ingredients in a preconditioner.

The resulting product, i.e. the texturised plant protein, obtained with the above method of system is a low moisture texturised plant protein having a water content of 5% to 12% by weight, preferably 8% to 10% by weight. Accordingly, the total solids content of said low-moisture product is in the range from 95-88 wt.-%, preferably 92-90 wt.-%, based on the entire weight of the product. The water content and other properties of the product may be adjusted by changing certain parameters of the extruder 2 such as the dimension and/or angles of the screw(s), the dimension of the barrel, length of the extrusion, temperature of the extrusion process, or the used die.

The present invention is thus also related to a low-moisture texturised plant protein, obtainable by the method of the present invention.

Preferably, said low-moisture texturised plant protein has a water content of 5% to 12% by weight and comprises 25% to 60% by weight of BSG, preferably having a particle size of 1 to 20 mm, with an average particle size (D₅₀) above 100 µm and (D₉₀) below 400 µm, and furthermore comprises at least a plant protein, preferably selected from the group consisting of pulses protein, preferably pea protein, soy protein, wheat gluten, gluten protein, oilseeds, protein isolates, protein concentrates, protein isolate. More preferably, said low-moisture texturised plant protein comprises 35% to 70% by weight of said at least one plant protein, especially preferred a mixture of gluten and a plant protein selected from the group consisting of soy protein and pea protein.

The extruder 2 may be at least partially cooled to maintain a temperature of 130-170 °C and more preferred 150 °C. The downstream side of the extruder 2 may be hotter than the upstream side.

The extruder 2 may be preheated before the mixture is provided to the extruder 2 or mixed in the extruder 2, respectively. Different areas of the extruder 2 may be heated or cooled differently. It may be sufficient to switch off a heating of the extruder 2. At least the last segment of the extruder 2 may be cooled.

The method of the present invention can be carried out in a corresponding system for producing a texturised plant protein by using the method as described above, as exemplarily shown in Figs. 2 or 3. The system comprises a grinder 1 configured to grind BSG and an extruder 2 configured to process ingredients comprising BSG and at least one plant protein to obtain a texturised plant protein having a homogenous fibrous structure. The system further comprises a cutting device 4 configured to cut the texturised plant protein. After cutting, the texturised plant protein is dried in a drying device 4. The dryer may be a fluid bed dryer.

Moreover, a sieving device 9 may be provided for sieving the dried texturised plant protein. The sieve 9 may also be provided prior to the dryer 8.

A preconditioner may be provided for hydration of the BSG.

Fig. 2 describes an exemplary embodiment according to the present disclosure. Unless indicated otherwise, this embodiment is fully compatible with the description above. According to the flowchart of Fig. 2, BSG is obtained from the mash in a lauter tun 5. Moreover, malt extract may also be obtained from the mash. BSG is stored in a silo 6 and subsequently provided to a mill 1. As described above, warm or hot BSG may be used. The BSG may also be dehydrated or rehydrated before or after milling. The milled or ground BSG is subsequently provided to an extruder 2 together with further ingredients. The ingredients may also be mixed prior to filling them into the extruder 2. In the extruder 2, a homogenous fibrous structure is generated to obtain a texturised plant protein. The obtained texturised plant protein is subsequently cut in a cutter 4, dried in a dryer 8 and optionally sieved in a sieve 9 to generate the final product, a low moisture (dry) texturised plant protein (TPP) or texturised vegetable protein (TVP), respectively.

Fig. 3 describes an exemplary embodiment according to the present disclosure. Again, this example is fully compatible with the above description unless indicated otherwise. In addition to the example of Fig. 2, the BSG is dehydrated prior to grinding it in the mill 1. Therefore, water is added during the processing step in the extruder 2. As described above, the wet texturised plant protein obtained by the extrusion process in the extruder 2 is subsequently cut, dried and preferably sieved to obtain the final product.

According to a first example composition, BSG having a high water content was ground, mixed with a plant protein (for example concentrate or isolate) and water, extruded and further processed as explained above to obtain a dry, i.e. low moisture texturised plant protein.

According to a second example, BSG with a low water content was rehydrated prior to grinding, mixed with a plant protein (for example concentrate or isolate), and water, extruded and further processed as explained above to obtain a dry texturised plant protein.

According to a third example, BSG was dewatered in a drying device. Subsequently, the dry BSG was ground, rehydrated, mixed with wheat gluten, protein concentrate and water, extruded and further processed as explained above to obtain a dry texturised plant protein.

According to a fourth example, BSG was dewatered in a drying device. Subsequently, the dry BSG was rehydrated, mixed with wheat gluten, flour and water, extruded and further processed as explained above to obtain a dry texturised plant protein.

The present disclosure also relates to a food product, in particular a vegetarian food product, comprising a texturised plant protein produced according to the method as disclosed herein. In particular, the food product may comprise 30% to 55% by weight of BSG, preferably 45% to 50% by weight. The food product may comprise 40% to 75% by weight of texturised plant protein, preferably 50% to 70% by weight of texturised plant protein. Moreover, the food product may comprise micronutrients, preferably minerals, more preferably at least one of iron, zinc or magnesium and/or vitamins, preferably at least one of B-Group, C or D group.

The texturised plant protein comprising a high amount of BSG as described above may be mixed with further ingredients (e.g. flavours, stabilising ingredients, salt, protein, etc.), water and/or oil to form a dough or mix. Said dough or mix may then be processed to obtain a food product.

The texturised plant protein comprising a high amount of BSG as described above may be fermented using food grade bacteria and fungi starter cultures (e.g. lactobacillus, staphylococcus, and penicillium species). By fermentation of the texturised plant protein flavour may be added and the subsequent food product may be stabilised (e.g. vegetarian sausage or salami).

Said food product may comprise vegetarian Burger Patties, vegetarian Sausage, vegetarian Samosas, vegetarian Dumplings, vegetarian Gyros, vegetarian Goulash, vegetarian Kebab, vegetarian Pulled Pork, vegetarian Pulled Beef, vegetarian Mince Meat, vegetarian Schnitzel, vegetarian Hot Dogs, vegetarian Meat Balls, vegetarian Chicken Nuggets, vegetarian Chorizo, vegetarian Chicken Strips or vegetarian Züri Geschnetzeltes.

The present disclosure thus provides a method, system and food product which uses brewer's spent grain as a main ingredient, which has mainly been classified as food waste or byproduct and was thus until now not easily accessible for production of human food products. The addition of BSG to obtain low moisture texturized vegetable protein as a functional fiber and protein supplement improves the texture and lowers the cost compared to similar ingredients. Moreover, using an upcycled ingredient from the beverages industry significantly improves the CO₂ footprint of the foods produced with BSG.

Other aspects, features, and advantages will be apparent from the summary above, as well as from the description that follows, including the figures and the claims.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

### Example 1

15 kg of wet brewer spent grain (dry weight of 22 wt.-%) from a lauter tun mash of a beer brewing process were ground in a colloid mill (Stephan MZ 100) to a a desired particle size of (D₅₀) below 100 µm and (D₉₀) below 400 µm, optionally via more than one grinding steps.

The thus obtained material was inserted into an extruder and mixed with soy protein concentrate and NaCl in a ratio of 30 wt.-% brewer spent grain, 39 wt.-% soy protein concentrate, 0,5 wt.-% NaCl and the balance being water, based on the entire amount of ingredients.

The thus obtained mixture was extruded under conditions of mass flow of 60 kg/h, motor speed of 500 rpm, extruder barrel temperatures between 140-170 °C, and die plate pressure of 31 bar.

The extruded texturized protein product was cut, dried to a water content of 8 to 12 wt.-%, based on the entire weight of the texturized protein product, and sieved through a sieve with a mesh size of 250 micrometers.

Example 2The process of example 1 was repeated, but the brewer spent grain was dehydrated before grinding to a water content of 6%. Subsequently, the material was mixed with the other components (soy protein, NaCI) and rehydrated by adding the amount of water that was removed during the drying step into the extruder. Further process steps were identical as in example. 1

The thus obtained mixture was extruded under conditions of mass flow of 40 kg/h, motor speed of 500 rpm, extruder barrel temperatures between 140-174 °C, and die plate pressure of 24bar.

The extruded texturized protein product was cut, dried to a water content of 8 to 12 wt.-%, based on the entire weight of the texturized protein product, and sieved through a sieve with a mesh size of 250 micrometers.

### Example 3

The process of example 2 was repeated, but the dehydrate brewer spent grain was mixed with 57 wt.-% gluten and 21 wt.-% pea protein concentrate. Subsequently, the material was rehydrated by adding 44 wt.-% water into the extruder.

The thus obtained mixture was extruded under conditions of mass flow of 50 kg/h, motor speed of 600 rpm, extruder barrel temperatures between 140-165 °C, and die plate pressure of 18 bar.

The extruded texturized protein product was cut, dried to a water content of 8 to 12 wt.-%, based on the entire weight of the texturized protein product, and sieved through a sieve with a mesh size of 250 micrometers.

## Claims

1. Method for producing a low-moisture texturised plant protein having a water content of 5% to 12% by weight, the method comprising the steps of:
a) grinding of brewer's spent grain, BSG,
b) providing ingredients for obtaining a mixture, the ingredients comprising 25% to 60% by weight of the ground BSG and at least a plant protein,
c) processing the mixture in an extruder (2), wherein a homogenous fibrous structure is generated in the extruder (2) to obtain a texturised plant protein,
d) cutting the texturized plant protein, and
e) drying the texturized vegetable protein after cutting.

2. Method according to claim 1, wherein the ingredients comprise 30% to 55% by weight of BSG, preferably 45% to 50% by weight of BSG.

3. Method according to claim 1 or 2, wherein the dried texturized plant protein is sieved.

4. Method according to any one of the preceding claims, wherein the ingredients are mixed to a pre-mixture in step b) and the pre-mixture is provided to the extruder (2).

5. Method according to any one of the preceding claims, further comprising dehydrating the BSG before step a).

6. Method according to any one of the preceding claims, further comprising adding water to the mixture in the extruder (2) during step c), and
further preferably comprising pre-hydration of the BSG in another part in the extruder (2) during step c).

7. Method according to claim 5 or 6, further comprising rehydrating the dehydrated BSG prior to or after step a), preferably in a preconditioner.

8. Method according to any one of the preceding claims, wherein the ingredients comprise one or more of pulses protein, preferably pea protein, soy protein, wheat gluten, gluten protein, oilseeds, protein isolates, protein concentrates, protein isolates, microalgae or water, and/or
wherein the BSG comprises barley, and optionally wheat, oat, millet, sorghum, cassava root, rye, rice, maize or spent grain protein concentrate.

9. Method according to any one of the preceding claims, wherein the extruder (2) is at least partially cooled to 130 °C to 170 °C, preferably to 150 °C,
wherein preferably the downstream side of the extruder (2) is hotter than the upstream side, and/or
wherein a gas is added, preferably CO₂, during step c).

10. A low-moisture texturised plant protein, obtainable by the method according to any of claims 1 to 9.

11. Low-moisture texturised plant protein according to claim 10, wherein the plant protein has a water content of 5% to 12% by weight and comprises 25% to 60% by weight of BSG, preferably having a particle size of 1 to 20 mm, with an average particle size (D₅₀) below 100 µm and (D₉₀) below 400 µm, and furthermore comprises at least a plant protein, preferably selected from the group consisting of pulses protein, preferably pea protein, soy protein, wheat gluten, gluten protein, oilseeds, protein isolates, protein concentrates, protein isolates.

12. Vegetarian food product, preferably a burger patty, comprising a texturised plant protein obtainable by the method of any one of claims 1 to 9.

13. Vegetarian food product according to claim 12 comprising 30 % to 55 % by weight of texturised plant protein, TPP, preferably 45 to 50 % by weight of TTP produced according to the method of any one of claims 1 to 9.

14. Vegetarian food product according to claim 12 or 13, comprising micronutrients, preferably minerals, more preferably at least one of iron, zinc or magnesium and/or vitamins, preferably at least one of B-Group, C or D group.

15. Vegetarian food product according to claim 12 to 14, comprising a fermented plant protein obtained by fermentation of the texturised plant protein with starter cultures, preferably food grade bacteria and fungi.
